Europäisches Patentamt

European Patent Office

Office européen des brevets

(19)

(11) Numéro de publication : **0 336 087 B1**

## FASCICULE DE BREVET EUROPEEN

(12)

(45) Date de publication du fascicule du brevet :
**22.01.92 Bulletin 92/04**

(51) Int. Cl.$^5$ : **C21B 7/00, B01D 51/10**

(21) Numéro de dépôt : **89102865.6**

(22) Date de dépôt : **20.02.89**

(54) **Procédé et installation pour le traitement d'un courant de gaz contenant de la poussière pyrophorique.**

(30) Priorité : **09.03.88 BE 8800257**

(43) Date de publication de la demande :
**11.10.89 Bulletin 89/41**

(45) Mention de la délivrance du brevet :
**22.01.92 Bulletin 92/04**

(84) Etats contractants désignés :
**BE DE ES FR GB IT SE**

(56) Documents cités :
**EP-A- 0 097 292
DE-B- 1 268 636
DE-C- 708 282
FR-A- 2 375 562**

(73) Titulaire : **ACEC-Union Minière, société anonyme dite :**
**avenue Emile Rousseau**
**B-6001 Marcinelle (Charleroi) (BE)**

(72) Inventeur : **Van Camp, Maurits C.P.**
**Pansgatelaan 40**
**B-2510 Mortsel (BE)**
Inventeur : **Wattel, Philippe M.P.G.B.**
**L. De Koninckstraat 15**
**B-2600 Berchem (BE)**
Inventeur : **Delvaux, Andre L.M.**
**Ceurvorstlaan 3**
**B-2610 Wilrijk (BE)**

(74) Mandataire : **Saelemaekers, Juul et al**
**c/o MHO Division de S.A ACEC-Union Minière**
**N.V. Adolf Greinerstraat 14**
**B-2660 Hoboken (BE)**

## Description

La présente invention se rapporte à un procédé pour le traitement d'un courant de gaz contenant de l'oxygène et de la poussière pyrophorique, selon lequel on dirige le courant de gaz à travers un filtre à sacs et on prend préalablement des mesures pour éviter que le filtre à sacs ne soit dégradé par de la poussière brûlante.

Un tel procédé est connu par l'article "Application of fabric filters to lead and zinc smelters", R.S. Godsey, Air Poll. Contr. Assoc. Conf. "The user and fabric filtration equipment", U.S.A. October 1973 ; pp. 122-134. Dans ce procédé connu le courant de gaz à traiter est le gaz, qui est aspiré à la tête d'un haut fourneau à plomb, et on y prend les mesures suivantes pour éviter que le filtre à sacs ne soit dégradé par de la poussière brûlante :

— le gaz est conduit du haut fourneau vers le filtre à sacs à travers une conduite énormément grande (1,5 m de large et 4,2 m de haut), ce qui fait qu'une partie de la poussière pyrophorique, qui est entraînée par le gaz, a l'occasion de se déposer dans la conduite et n'atteint donc jamais le filtre à sacs ;

— une matière inerte comme de la chaux éteinte ou du gypse est injectée dans la conduite pour rendre moins pyrophorique la poussière qui est entraînée par le gaz ;

— dans le filtre à sacs lui-même une grande distance est prévue entre d'une part les sacs filtrants et d'autre part le sol, au-dessus duquel les sacs filtrants sont suspendus et sur lequel la poussière, qui est retenue par les sacs filtrants, est recueillie ;

— la poussière, qui a été recueillie sur le sol, est allumée journellement avec un morceau de coke incandescent pour éviter qu'il ne se forme à cet endroit, sous les sacs filtrants, une grande quantité de matière combustible.

Ce procédé connu a les désavantages suivants :

— il requiert une très grande conduite, ce qui occasionne d'importants frais d'investissement et d'entretien ;

— il donne lieu à des conditions de travail antihygiéniques lors du nettoyage de la conduite ;

— il requiert l'addition de matière inerte, ce qui non seulement fait monter les frais de fonctionnement, mais aboutit également à une dilution par cette matière inerte des poussières volantes collectées ; en outre la détermination de la quantité de matière inerte à ajouter est complexe et l'injection elle-même peut aussi mener à des problèmes ;

— il nécessite la construction d'un filtre à sacs de haute taille, dont la partie collectrice de poussière doit en outre être réalisée en un matériau réfractaire, ce qui occasionne, une fois de plus, d'importants frais d'investissement.

Le but de la présente invention est de fournir un procédé tel que défini ci-dessus, permettant d'éviter les désavantages du procédé connu.

Selon l'invention les mesures susdites consistent en ce qu'on veille constamment à ce que le courant de gaz ait durant au moins 1 seconde une température d'au moins 270°C, tout en maintenant la température du courant de gaz en dessous de 500°C.

D'une part, en veillant constamment à ce que le courant de gaz ait durant au moins 1 seconde une température d'au moins 270°C, la poussière pyrophorique présente dans le courant de gaz est oxydée et elle perd ainsi son caractère pyrophorique, de sorte que l'injection de matière inerte devient totalement superflue et que les dimensions de la conduite de gaz et du filtre à sacs peuvent être fortement réduites. D'autre part, en maintenant la température du courant de gaz en dessous de 500°C, on évite que la poussière oxydée ne fonde ou ne devienne collante et occasionne ainsi une incrustation dans l'installation, dans laquelle le courant de gaz est traité ; en même temps on évite ainsi que des matériaux réfractaires onéreux doivent être utilisés pour construire ladite installation.

Il y a lieu de remarquer ici que la publication discutée ci-dessus mentionne à la page 128, alinéa 2, ce qui suit :

"L'expérience dans cette usine montre que, si les gaz de four sont contrôlés jusqu'en dessous de 500°F (260°C), la teneur en plomb et en zinc métallique sera élevée et la poussière dans le filtre à sacs plus inflammable.

Lorsqu' on travaille à des températures dépassant 500°F (260°C), les composants métalliques s'oxydent et la quantité de chaux, nécessaire à contrôler la vitesse de combustion, diminue...".

Il est évident qu'on ne peut pas en déduire qu'il suffit de veiller constamment à ce que le gaz ait durant 1 seconde une température de 270°C pour oxyder la poussière métallique (pyrophorique) qu'il contient de manière telle que l'addition de chaux devienne superflue. Cet état de la technique ne suggère donc nullement le procédé de l'invention.

Dans le procédé de l'invention il est recommandable de donner au courant de gaz durant au moins 2 secondes une température d'au moins 300°C pour obtenir une sécurité de service optimale. Il est également recommandable de maintenir la température du courant de gaz en dessous de 400°C, de manière à pouvoir réaliser l'installation, dans laquelle le courant de gaz est traité, en une sorte d'acier bon marché.

Le procédé de l'invention est particulièrement intéressant pour traiter les gaz, qui sont aspirés aux hauts fourneaux dans lesquels des métaux non-ferreux tels que le plomb et le cuivre sont extraits, étant donné que ces gaz ont généralement déjà une température de 100 à 150°C et contiennent en plus du combustible sous la forme d'oxyde de carbone, de sorte qu'on ne doit y ajouter que peu d'énergie pour leur donner durant le temps prescrit la température prescrite.

La présente invention se rapporte également à une installation pour le traitement d'un courant de gaz qui contient de l'oxygène et de la poussière pyrophorique, comprenant :

— un réfrigérant,
— un filtre à sacs,
— une conduite pour amener le courant de gaz vers le réfrigérant,
— une conduite pour amener le courant de gaz du réfrigérant vers le filtre à sacs, et
— des moyens pour éviter que les sacs filtrants du filtre à sacs ne soient dégradés par de la poussière brûlante.

Une telle installation est connue par la publication discutée ci-dessus. Dans cette installation connue les moyens pour éviter que les sacs filtrants ne soient dégradés consistent, d'une part, en les grandes dimensions des conduites et du filtre à sacs et, d'autre part, en des appareils pour injecter une matière inerte dans les conduites. Cette installation connue a dès lors le désavantage d'occasionner d'importants frais d'investissement et d'entretien et en outre elle ne permet pas de mettre en application le procédé de l'invention tel que défini ci-dessus.

L'installation selon l'invention, permettant de mettre en application le procédé de l'invention et d'éviter les désavantages de l'installation connue, est caractérisée en ce que les moyens susdits comprennent une chambre avec une entrée et une sortie séparées, la sortie étant raccordée avec la conduite, qui amène le courant de gaz vers le réfrigérant, et l'entrée étant raccordée avec une conduite menant vers l'origine du courant de gaz, la chambre étant équipée à l'entrée de moyens de chauffage qui sont adaptés à traiter le gaz entrant dans la chambre de façon que ce gaz ait au moins durant 1 seconde une température d'au moins 270°C, et la chambre étant également équipée de moyens de refroidissement qui sont adaptés à maintenir la température du courant de gaz dans la chambre en dessous de 500°C.

D'autres détails et particularités de l'invention ressortiront de la description d'un mode d'exécution d'un procédé et d'une installation selon l'invention, donnée ci-dessous à titre d'exemple non-limitatif et avec référence aux dessins ci-annexés.

Dans ces dessins :

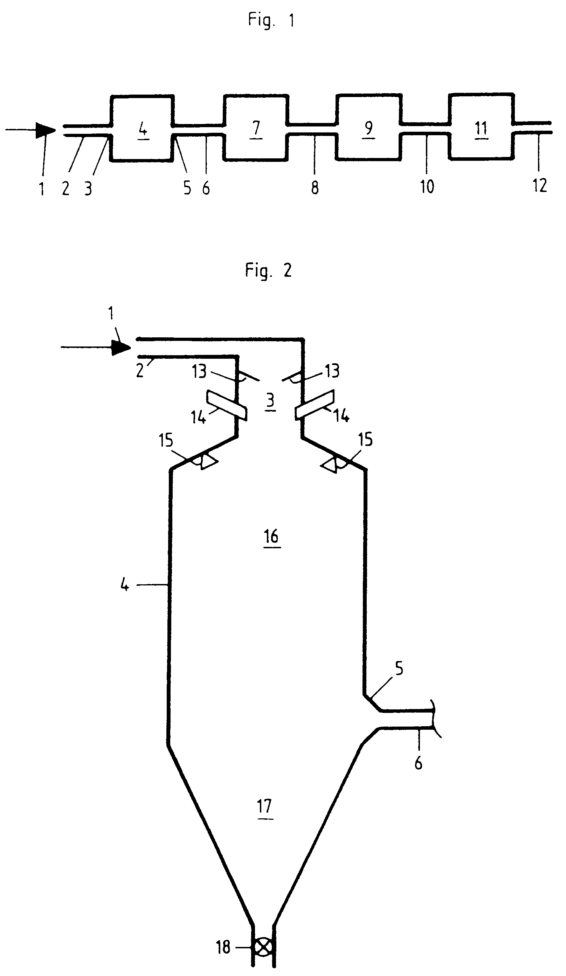

— la figure 1 représente un schéma élémentaire d'une installation selon l'invention et
— la figure 2 montre de manière plus détaillée et en coupe verticale une partie de l'installation de figure 1.

Dans ces figures les mêmes notations de référence désignent des éléments identiques.

Un courant de gaz 1 à traiter, formé lors de l'aspiration du gaz de four d'un haut fourneau à plomb, contient de la poussière pyrophorique (Pb, Cd et sulfures divers) et environ 8,5% de CO ; il contient également de l'oxygène, étant donné que de l'air faux (parasitaire) est aspiré en même temps que le gaz de haut fourneau. Le courant de gaz 1 a d'habitude une température de 100 à 150°C. Le courant de gaz 1, qui est déplacé par un ventilateur non-représenté, est amené par une conduite 2 dans l'entrée 3 d'une chambre 4, ensuite dans la chambre 4 elle-même, puis à travers la sortie 5 de la chambre 4 et par une conduite 6 vers un réfrigérant 7, d'où il est dirigé à travers une conduite 8 vers un filtre à sacs 9. Après passage à travers le filtre à sacs 9, le courant de gaz 1 passe à travers une conduite 10 dans un appareil de post-combustion 11, d'ou il est évacué par une conduite 12 vers une cheminée non-représentée.

A l'entrée 3 de la chambre 4, des ailerons 13 sont prévus pour rendre le courant de gaz 1 turbulent et obtenir ainsi un bon mélange entre le gaz de haut fourneau proprement dit, qui est présent dans le courant de gaz 1, et l'air faux qui a été aspiré en même temps que le gaz de haut fourneau.

A l'entrée 3 de la chambre 4 débouchent deux brûleurs à gaz ou à mazout 14 qui sont commandés par des moyens de contrôle de la température, connus en soi et non-représentés, qui mesurent la température du courant de gaz 1 en amont et en aval des brûleurs 14, entre autres à la sortie 5 de la chambre 4, et qui commandent les brûleurs de manière telle que le courant de gaz 1 lors de son passage à travers la chambre 4 ait durant au moins deux secondes, par exemple durant trois secondes, une température d'environ 300°C. La chambre 4 6 est donc conçue de manière telle que le courant de gaz 1 puisse y séjourner durant au moins deux secondes. La poussière dans le courant de gaz 1, quittant la chambre 4, est en substance complètement oxydée et elle n'est plus pyrophorique, alors que la teneur en CO du courant de gaz n'a baissé que jusqu'à environ 5%.

Il peut parfois arriver qu'en chauffant jusqu'à 300°C un courant de gaz tel que le courant de gaz 1, qui contient de l'oxygène et de l'oxyde de carbone, il s'y produit une réaction en chaîne enflammant le courant de gaz et pouvant développer des températures supérieures à 800°C. Ceci doit de toute façon être évité ici et c'est pourquoi des gicleurs d'eau 15 ont été prévus en haut de la chambre 4, entrant en action lorsque la température du courant de gaz 1 à la sortie 5 de chambre 4 reste plus élevée que voulue, par exemple supérieure à 350°C. Les gicleurs 15 entrent d'ailleurs également en action lorsque pour n'importe quelle raison, par exemple à la suite de la vidange (partielle) du haut fourneau, la température du courant de gaz 1 à traiter devient trop élevée, par exemple supérieure 350°C. Il va de soi que les gicleurs 15 cessent de fonctionner lorsque les températures voulues sont atteintes à l'entrée et à la sortie de la chambre 4.

La chambre 4, dont la partie supérieure au niveau de la sortie 5 constitue donc une zone de traitement thermique 16, est équipée sous le niveau de la sortie 5 d'une partie conique 17, qui constitue une zone de dépôt, dans laquelle les particules de poussière plus lourdes, qui sont entraînées par le courant de gaz, comme par exemple des particules de coke chaud, ont l'occasion de se déposer et d'où la matière collectée peut être évacuée par le sas 18.

Le courant de gaz qui est conduit par la conduite 6 vers le réfrigérant 7 connu en soi, est donc exempt de poussière pyrophorique et de poussière grosse et il a une température d'environ 300°C. Dans le réfrigérant 7, par exemple un échangeur de chaleur dans lequel le courant de gaz est utilisé pour préchauffer le vent de haut fourneau, le courant de gaz est refroidi jusqu'à une température aussi basse que possible située au-dessus du point de rosée du gaz, par exemple jusqu'à 80°C. Le courant de gaz est à présent conditionné de manière optimale pour être filtré dans le filtre à sacs 9, après quoi il est conditionné de manière optimale pour être post-brûlé dans l'appareil de post-combustion 11 connu en soi, dans lequel l'oxyde de carbone et les composés organiques gazeux, si présents, sont brûlés à 800°C ou plus.

Le diamètre des conduites 2, 6 et 8 est choisi de manière telle que le courant de gaz 1 atteigne une vitesse suffisante pour éviter que des quantités substantielles de poussière ne se déposent dans les conduites. Toutes les matières solides du courant de gaz sont donc collectées essentiellement dans le zone de dépôt 17 et dans le filtre à sacs 9, de sorte que les conduites ne doivent être nettoyées que fort exceptionnellement.

Le filtre à sacs 9 est du type compact, étant donné qu'à présent il ne faut plus prévoir une grande distance entre les sacs filtrants et le sol comme dans l'installation connue discutée ci-dessus. Il est en outre intégralement réalisé en un matériau non-réfractaire bon marché, car il ne faut pas non plus y brûler de la poussière.

Beaucoup de modifications peuvent évidemment être apportées au mode d'exécution du procédé et de l'installation selon l'invention décrit ci-dessus, sans sortir pour autant de la portée de l'invention.

Ainsi peut-on utiliser d'autres moyens que les ailerons 13 pour provoquer de la turbulence. On peut par exemple placer les brûleurs 14 de manière asymétrique ou faire déboucher la conduite 2 tangentiellement dans l'entrée 3.

Aussi peut-on travailler avec un seul brûleur au lieu de deux, à condition évidemment de choisir un brûleur suffisamment puissant. On pourrait naturellement aussi travailler avec trois brûleurs ou même plus.

Au lieu d'un chauffage direct avec des gaz de brûleur on pourrait même utiliser un système de chauffage indirect. On pourrait également installer un système de refroidissement indirect au lieu des gicleurs 15. Ces systèmes indirects entraîneraient cependant une augmentation des frais d'investissement et d'exploitation.

Au lieu de la zone de dépôt 17 en bas de la chambre 4, on pourrait prévoir un cyclone entre la chambre 4 et le réfrigérant 7 ou entre ce dernier et le filtre à sacs 9. On pourrait aussi ne prévoir aucun des deux, mais la sécurité de service de l'installation en souffrirait.

Dans le réfrigérant 7 il ne faut pas non plus arriver très près du point de rosée. On pourrait par exemple refroidir jusqu'à 100°C ou 120°C, mais ceci aurait comme conséquence que le courant de gaz quittant le filtre à sacs 9 devient plus riche en impuretés, étant donné que la filtration s'est faite à une température plus élevée, à laquelle les impuretés ont une tension de vapeur plus élevée.

On peut travailler sans l'appareil de post-combustion 11 ou ne pas du tout prévoir celui-ci, lorsque la composition du courant de gaz quittant le filtre à sacs est telle que son évacuation immédiate n'est pas contraire aux dispositions légales.

## Revendications

1. Procédé pour le traitement d'un courant de gaz contenant de l'oxygène et de la poussière pyrophorique, selon lequel on dirige le courant de gaz à travers un filtre à sacs et on prend préalablement des mesures pour éviter que le filtre à sacs ne soit dégradé par de la poussière brûlante, caractérisé en ce que les mesures susdites consistent en ce qu'on veille constamment à ce que le courant de gaz ait durant au moins une seconde une température d'au moins 270°C, tout en maintenant la température du courant de gaz en dessous de 500°C.

2. Procédé selon la revendication 1, caractérisé en ce que le courant de gaz a durant au moins 2 secondes une température d'au moins 300°C.

3. Procédé selon la revendication 1 ou 2, caractérisé en ce qu'on maintient la température du courant de gaz en dessous de 400°C.

4. Procédé selon l'une des revendications 1 à 3, caractérisé en ce qu'on dirige le courant de gaz à travers une zone de traitement thermique, à l'entrée de laquelle le courant de gaz est chauffé.

5. Procédé selon la revendication 4, caractérisé en ce que le courant de gaz est chauffé en y injectant des produits de combustion d'un brûleur.

6. Procédé selon la revendication 4 ou 5, caractérisé en ce qu'on mesure, au moins à la sortie de la zone de traitement thermique, la température du courant de gaz et on règle à l'entrée l'échauffement en fonction de la température mesurée.

7. Procédé selon la revendication 6, caractérisé en ce qu'on refroidit le courant de gaz dans la zone de traitement thermique, lorsque sa température à la sortie de cette zone reste plus élevée que voulue.

8. Procédé selon la revendication 7, caractérisé en ce qu'on refroidit le courant de gaz en y pulvérisant de l'eau.

9. Procédé selon l'une des revendications 4 à 8, caractérisé en ce qu'on rend le courant de gaz turbulent à l'entrée de la zone de traitement thermique.

10. Procédé selon l'une des revendications 4 à 9, caractérisé en ce qu'on introduit le courant de gaz en haut de la zone de traitement thermique et on l'en évacue latéralement en bas.

11. Procédé selon la revendication 10, caractérisé en ce qu'on fait se terminer la zone de traitement thermique en dessous du niveau, auquel le courant de gaz en est évacué, en une zone de dépôt dans laquelle une partie de la poussière est collectée.

12. Procédé selon la revendication 11, caractérisé en ce qu'on donne au courant de gaz, entre la source où il est formé et le filtre à sacs, une vitesse telle que la poussière soit empêchée de se déposer substantiellement, excepté dans ladite zone de dépôt.

13. Procédé selon l'une des revendications 1 à 12, caractérisé en ce qu'on traite un courant de gaz contenant de l'oxyde de carbone et/ou des composés organiques gazeux et qu'on brûle le courant de gaz, ayant passé le filtre à sacs, à au moins 800°C.

14. Procédé selon l'une des revendications 1 à 13, caractérisé en ce qu'un courant de gaz est traité qui est aspiré d'un haut fourneau dans lequel des métaux non-ferreux sont extraits.

15. Installation pour le traitement d'un courant de gaz contenant de l'oxygène et de la poussière pyrophorique, comprenant :
— un réfrigérant,
— un filtre à sacs,
— une conduite pour amener le courant de gaz vers le réfrigérant,
— une conduite pour amener le courant de gaz du réfrigérant vers le filtre à sacs, et
— des moyens pour éviter que les sacs filtrants du filtre à sacs ne soient dégradés par de la poussière brûlante,
caractérisée en ce que les moyens susdits comprennent une chambre avec une entrée et sortie séparées, la sortie étant raccordée avec la conduite, qui amène le courant de gaz vers le réfrigérant, et l'entrée étant raccordée avec une conduite menant vers l'origine du courant de gaz, la chambre étant équipée à l'entrée de moyens de chauffage qui sont adaptés à traiter le gaz entrant dans la chambre de façon que ce gaz ait durant au moins 1 seconde une température d'au moins 270°C, et la chambre étant également équipée de moyens de refroidissement qui sont adaptés à maintenir la température du courant de gaz dans le chambre en dessous de 500°C.

16. Installation selon la revendication 15, caractérisée en ce que les moyens de chauffage consistent en au moins un brûleur débouchant dans l'entrée de la chambre.

17. Installation selon la revendication 15 ou 16, caractérisée en ce que les moyens de refroidissement consistent en au moins un gicleur d'eau.

18. Installation selon l'une des revendications 15 à 17, caractérisée en ce que des moyens sont prévus à l'entrée de la chambre pour rendre le courant de gaz entrant turbulent.

19. Installation selon l'une des revendications 15 à 18, caractérisée en ce que l'entrée se trouve en haut de la chambre et la sortie latéralement.

20. Installation selon la revendication 19, caractérisée en ce qu'en dessous du niveau de la sortie la chambre est munie d'une zone de dépôt.

21. Installation selon l'une des revendications 15 à 20, caractérisée en ce que le diamètre des conduites susdites est tellement petit qu'on puisse donner au courant de gaz une vitesse telle que la poussière soit empêchée de se déposer substantiellement dans les conduites.

22. Installation selon l'une des revendications 15 à 21, caractérisée en ce qu'elle comprend un appareil de post-combustion ainsi qu'une conduite pour amener le courant de gaz du filtre à sacs vers cet appareil de post-combustion.


**Patentansprüche**

1. Verfahren zur Behandlung eines Gasstromes, der Sauerstoff und pyrophoren Staub enthält, wobei der Gasstrom durch einen Schlauchfilter geleitet wird und vorhergehende Maßnahmen ergriffen werden, um zu verhindern, daß der Schlauchfilter durch brennenden Staub geschädigt wird, **dadurch gekennzeichnet,** daß die genannten Maßnahmen darin bestehen, kontinuierlich Sorge dafür zu tragen, daß der Gasstrom für wenigstens eine Sekunde eine Temperatur von mindestens 270°C hat, während die Temperatur des Gasstromes unter 500°C gehalten wird.

2. Verfahren nach Anspruch 1, dadurch gekennzeichnet, daß der Gasstrom für wenigstens 2 Sekunden eine Temperatur von mindestens 300°C hat.

3. Verfahren nach Anspruch 1 oder 2, dadurch gekennzeichnet, daß die Temperatur des Gasstromes unter 400°C gehalten wird.

4. Verfahren nach einem der Ansprüche 1 bis 3, dadurch gekennzeichnet, daß der Gasstrom durch eine Wärmebehandlungszone geleitet wird, an deren Einlaß der Gasstrom erwärmt wird.

5. Verfahren nach Anspruch 4, dadurch gekennzeichnet, daß der Gasstrom dadurch erhitzt wird, daß in ihn Verbrennungsprodukte von einem Brenner injiziiert werden.

6. Verfahren nach Anspruch 4 oder 5, dadurch gekennzeichnet, daß zumindest am Ausgang der Wärmebehandlungszone die Temperatur des Gasstromes gemessen wird, und daß die Wärme am Einlab als Funktion der gemessenen Temperatur geregelt wird.

7. Verfahren nach Anspruch 6, dadurch gekennzeichnet, daß der Gasstrom in der Wärmebehandlungszone abgekühlt wird, sofern seine Temperatur am Ausgang dieser Zone höher als gewünscht ist.

8. Verfahren nach Anspruch 7, dadurch gekennzeichnet, daß der Gasstrom durch Einsprühen von Wasser gekühlt wird.

9. Verfahren nach einem der Ansprüche 4 bis 8, dadurch gekennzeichnet, daß man im Gasstrom Turbulenzen am Einlaß der Wärmebehandlungszone erzeugt.

10. Verfahren nach einem der Anspruche 4 bis 9, dadurch gekennzeichnet, daß der Gasstrom in die Wärmebehandlungszone oben eingeleitet und hieraus unten seitlich abgeführt wird.

11. Verfahren nach Anspruch 10, dadurch gekennzeichnet, daß die Wärmebehandlungszone unterhalb der Ebene, in der der Gasstrom abgeführt wird, in einer Absetzzone endet, in der ein Teil des Staubes gesammelt wird.

12. Verfahren nach Anspruch 11, dadurch gekenneichnet, daß dem Gasstrom zwischen der Quelle, an der er erzeugt wird, und dem Schlauchfilter eine solche Geschwindigkeit verliehen wird, daß ein Absetzen des Staubes, außer in der genannten Absetzzone, im wesentlichen verhindert wird.

13. Verfahren nach einem der Ansprüche 1 bis 12, dadurch gekennzeichnet, daß ein Gasstrom behandelt wird, der Kohlenmonoxid und/oder gasförmige organische Verbindungen enthält, und daß der Gasstrom nach Passieren des Schlauchfilters bei mindestens 800°C verbrannt wird.

14. Verfahren nach einem der Ansprüche 1 bis 13, dadurch gekennzeichnet, daß ein Gasstrom behandelt wird, der von einem Hochofen ausgestoßen wird, in dem Nichteisenmetalle gewonnen werden.

15. Vorrichtung zur Behandlung eines Gasstromes, der Sauerstoff und pyrophoren Staub enthält, mit

— einer Kühleinrichtung,
— einem Schlauchfilter,
— einem Leitungsrohr, um den Gasstrom zur Kühleinrichtung zu leiten,
— einem Leitungsrohr, um den Gasstrom von der Kühleinrichtung zum Schlauchfilter zu leiten, und
— Einrichtungen, um zu verhindern, daß die Filterschläuche des Schlauchfilters durch brennenden Staub geschädigt werden, dadurch gekennzeichnet, daß die Einrichtungen eine Kammer mit separatem Ein- und Auslaß enthalten, wobei der Auslaß mit dem Leitungsrohr, das den Gasstrom zur Kühleinrichtung leitet, verbunden ist, und der Einlaß mit einem Leitungsrohr, das an den Ursprung des Gasstromes führt, verbunden ist, die Kammer am Einlaß mit Heizeinrichtungen ausgestattet ist, die darauf ausgelegt sind, das in die Kammer eintretende Gas derart zu behandeln, daß das Gas für wenigstens eine Sekunde eine Temperatur von mindestens 270°C hat, und die Kammer auch mit Kühleinrichtungen ausgestattet ist, die darauf ausgelegt sind, die Temperatur des Gasstromes in der Kammer unter 500°C zu halten.

16. Vorrichtung nach Anspruch 15, dadurch gekennzeichnet, daß die Heizeinrichtungen aus mindestens einem Brenner bestehen, der in den Einlaß der Kammer mündet.

17. Vorrichtung nach Anspruch 15 oder 16, dadurch gekennzeichnet, daß die Kühleinrichtungen aus mindestens einem Wassersprinkler bestehen.

18. Vorrichtung nach einem der Ansprüche 15 bis 17, dadurch gekennzeichnet, daß am Einlaß der Kammer Einrichtungen vorhanden sind, um Turbulenzen in dem eintretenden Gasstrom zu erzeugen.

19. Vorrichtung nach einem der Ansprüche 15 bis 18, dadurch gekennzeichnet, daß der Einlaß am oberen Ende der Kammer angebracht ist und der Auslaß seitlich.

20. Vorrichtung nach Anspruch 19, dadurch gekennzeichnet, daß die Kammer mit einer Absetzzone unterhalb der Ebene des Auslasses ausgestattet ist.

21. Vorrichtung nach einem der Ansprüche 15 bis 20, dadurch gekennzeichnet, daß der Querschnitt der Leitungsrohre so klein ist, daß man dem Gasstrom eine solche Geschwindigkeit verleihen kann, daß ein Absetzen des Staubes in den Leitungsrohren im wesentlichen verhindert wird.

22. Vorrichtung nach einem der Ansprüche 15 bis 21, dadurch gekennzeichnet, daß sie eine Nachverbrennungseinrichtung und ein Leitungsrohr aufweist, das den Gasstrom vom Schlauchfilter zur Nachverbrennungseinrichtung leitet.

## Claims

1. A process for treating a stream of gas containing oxygen and pyrophoric dust, according to which the stream of gas is sent through a bag filter and previously measures are taken to prevent that the bag filter would be damaged by burning dust, characterized in that said measures consist of continuously taking care that the stream of gas shall have for at least 1 second a temperature of at least 270°C, while keeping the temperature of the stream of gas below 500°C.

2. A process according to claim 1, characterized in that the stream of gas is given for at least 2 seconds a temperature of at least 300°C.

3. A process according to claim 1 or 2, characterized in that the temperature of the stream of gas is kept below 400°C.

4. A process according to any of the claims 1-3, characterized in that the stream of gas is sent through a heat treatment zone, at the inlet of which the stream of gas is heated.

5. A process according to claim 4, characterized in that the stream of gas is heated by injecting in it products of combustion from a burner.

6. A process according to claim 4 or 5, characterized in that at least at the outlet of the heat treatment zone the temperature of the stream of gas is measured and that the heating at the inlet is adjusted in function of the temperature measured.

7. A process according to claim 6, characterized in that the stream of gas is cooled in the heat treatment zone, when its temperature at the outlet of this zone remains higher than wanted.

8. A process according to claim 7, characterized in that the stream of gas is cooled by sprinkling water in it.

9. A process according to any of the claims 4-8, characterized in that the stream of gas is given turbulence at the inlet of the heat treatment zone.

10. A process according to any of the claims 4-9, characterized in that the stream of gas is introduced into the heat treatment zone at the top thereof and is carried off therefrom laterally at the lower part.

11. A process according to claim 10, characterized in that the heat treatment zone below the level, where the stream of gas is carried off, is made to end in a settling zone, wherein a part of the dust is collected.

12. A process according to claim 11, characterized in that the stream of gas is given such a velocity between the source, where it is generated and the bag filter, that the dust is prevented from settling substantially, except in said settling zone.

13. A process according to any of the claims 1-12, characterized in that a stream of gas is treated containing carbon monoxide and/or gaseous organic compounds and that the stream of gas is burnt beyond the bag filter at at least 800°C.

14. A process according to any of the claims 1-13, characterized in that a stream of gas is treated, that is exhausted from a blast furnace in which non-ferrous metals are recovered.

15. Installation for treating a stream of gas containing oxygen and pyrophoric dust, comprising
— a cooling apparatus,
— a bag filter apparatus,
— a conduit-pipe to bring the stream of gas to the cooling apparatus,
— a conduit-pipe to bring the stream of gas from the cooling apparatus to the bag filter apparatus, and

— means to prevent that the bag filters of the bag filter apparatus would be damaged by burning dust,
characterized in that said means comprise a chamber with separate in- and outlet, the outlet being connected with the conduit-pipe, which brings the stream of gas to the cooling apparatus, and the inlet being connected with a conduit-pipe, which leads to the origin of the stream of gas, the chamber being equipped at the inlet with heating means, which are suited to treat the gas flowing into the chamber in such a way that said gas has for at least 1 second a temperature of at least 270°C, the chamber being also equipped with cooling means, which are suited to keep the temperature of the stream of gas in the chamber below 500°C.

16. Installation according to claim 15, characterized in that the heating means consist of at least one burner debouching into the inlet of the chamber.

17. Installation according to claim 15 or 16, characterized in that the cooling means consist of at least one water sprinkler.

18. Installation according to any of the claims 15-17, characterized in that means are provided at the inlet of the chamber to give turbulence to the inflowing stream of gas.

19. Installation according to any of the claims 15-18, characterized in that the inlet is located at the top of the chamber and the outlet at the side thereof.

20. Installation according to claim 19, characterized in that the chamber is equipped with a settling zone below the level of the outlet.

21. Installation according to any of the claims 15-20, characterized in that the cross section of the beforementioned conduit-pipes is so small that such a velocity can be given to the stream of gas that the dust is prevented from settling substantially in the conduit-pipes.

22. Installation according to any of the claims 15-21, characterized in that it comprises an afterburning apparatus, as well as a conduit-pipe to bring the stream of gas from the bag filter apparatus to said afterburning apparatus.

Fig. 1

Fig. 2